# EUROPÄISCHE PATENTSCHRIFT

(11) **EP 0 451 465 B1**
(45) Veröffentlichungstag und Bekanntmachung des Hinweises auf die Patenterteilung: **12.01.1994**
(21) Anmeldenummer: 91102247.3
(22) Anmeldetag: 18.02.1991
(51) Int. Cl.: G01D 5/38

(54) **Lichtelektrische Positionsmesseinrichtung**
Opto-electrical position measuring device
Dispositif de mesure de positions opto-électronique

(30) Priorität: 13.03.1990 DE 4007967
(43) Veröffentlichungstag der Anmeldung: 16.10.1991
(73) Patentinhaber: Dr. Johannes Heidenhain GmbH, D-83292 Traunreut (DE)
(72) Erfinder: Bernard, Harald, Dipl.-Ing. (FH), W-8264 Waldkraiburg (DE); Spies, Alfons, Dipl.-Ing., W-8221 Seebruck (DE)

(56) Entgegenhaltungen:
- EP-A- 0 262 349
- PATENT ABSTRACTS OF JAPAN, vol. 10, no. 229 (P-485)(2285) 8. August 1986 & JP-A-61 065 115

## Beschreibung

Die Erfindung betrifft eine lichtelektrische Positionsmeßeinrichtung gemäß den Oberbegriff des Patentanspruchs 1.

Eine derartige Positionsmeßeinrichtung in Form einer Längenmeßeinrichtung oder einer Winkelmeßeinrichtung wird insbesondere bei Bearbeitungsmaschinen zur Messung der Relativlage eines Werkzeugs bezüglich eines zu bearbeitenden Werkstücks eingesetzt.

Aus der DE-PS 36 33 574 ist eine lichtelektrische Winkelmeßeinrichtung zur Messung der Winkellage zweier relativ zueinander drehbarer Objekte bekannt, bei der die inkrementale Winkelteilung eines mit dem einen Objekt verbundenen drehbaren Teilungsträgers an zwei diametral gegenüberliegenden Winkelteilungsbereichen mittels Lichtstrahlenbeugung von einer mit dem anderen Objekt verbundenen Abtasteinheit abgetastet wird, die eine Lichtquelle, ein Umlenkprisma sowie ein Photoelement aufweist. Ein von der Lichtquelle ausgehender Lichtstrahl trifft auf den ersten Winkelteilungsbereich der Winkelteilung auf und wird von der als Phasengitter ausgebildeten Winkelteilung in einen positiven Beugungsstrahl erster Ordnung unter einem positiven Beugungswinkel und in einen negativen Beugungsstrahl erster Ordnung unter einem negativen Beugungswinkel aufgespalten. Die beiden Beugungsstrahlen vereinigen sich nach zweimaliger Umlenkung durch das Umlenkprisma wieder unter den beiden gleichen zugehörigen Beugungswinkeln im diametral gegenüberliegenden zweiten Winkelteilungsbereich, werden zur Interferenz gebracht und fallen auf ein Photoelement zur Erzeugung eines Abtastsignals, aus dem die Meßwerte für die Winkellage der beiden Objekte gewonnen werden. Diese Doppelabtastung der Winkelteilung in zwei diametral gegenüberliegenden Winkelteilungsbereichen mittels Lichtstrahlenbeugung erlaubt eine vollständige Eliminierung von Exzentrizitätsfehlern, die durch die praktisch immer vorhandene Exzentrizität zwischen der Winkelteilung und der Drehachse des Teilungsträgers hervorgerufen werden und Meßungenauigkeiten zur Folge haben.

Im Zuge gestiegener Anforderungen an die Meßgenauigkeit können bei Winkelmeßeinrichtungen jedoch auch Taumelfehler nicht mehr toleriert werden, die fertigungsbedingt in einer nicht exakt senkrechten Montage des Teilungsträgers auf der Drehachse ihre Ursache haben. Dieses Taumeln des Teilungsträgers bewirkt, daß der Vereinigungspunkt der beiden Beugungsstrahlen im zweiten Winkelteilungsbereich in tangentialer und in radialer Richtung wandert, so daß der Auftreffpunkt des von der Lichtquelle ausgehenden Lichtstrahls im ersten Winkelteilungsbereich und der Vereinigungspunkt der beiden Beugungsstrahlen im zweiten Winkelteilungsbereich nicht mehr auf demselben Radius liegen; da die Gitterkonstante der inkrementalen Winkelteilung vom Radius abhängt, werden somit in den beiden Winkelteilungsbereichen unterschiedliche Gitterkonstanten abgetastet, so daß wiederum Meßungenauigkeiten auftreten.

Die gleiche Problematik tritt sinngemäß auch bei Längenmeßeinrichtungen bei dem gleichen Abtastprinzip in Form von Kippfehlern auf. Bei einer Drehung der linearen Meßteilung um eine Achse quer zur Meßrichtung (z. B. bei einer wellig verlaufenden Meßteilung) verschiebt sich der Vereinigungspunkt der beiden Beugungsstrahlen in Meßrichtung um einen bestimmten Betrag, der direkt als Meßfehler in das Meßergebnis eingeht.

Der Erfindung liegt die Aufgabe zugrunde, bei einer lichtelektrischen Positionsmeßeinrichtung der genannten Gattung derartige Taumelfehler oder Kippfehler zu kompensieren.

Diese Aufgabe wird erfindungsgemäß durch die kennzeichnenden Merkmale des Anspruchs 1 gelöst.

Die mit der Erfindung erzielten Vorteile bestehen insbesondere darin, daß durch das Vorsehen eines optischen Umlenkelements Taumelfehler oder Kippfehler eines Teilungsträgers auf einfache Weise kompensiert werden können, so daß einwandfreie Meßergebnisse erzielt werden.

Vorteilhafte Ausbildungen der Erfindung entnimmt man den abhängigen Patentansprüchen.

Ausführungsbeispiele der Erfindung werden anhand der Zeichnung näher erläutert.

Es zeigen
- Figur 1 - 3: eine lichtelektrische Winkelmeßeinrichtung in drei Ansichten und
- Figur 4 und 5: eine lichtelektrische Längenmeßeinrichtung in zwei Ansichten.

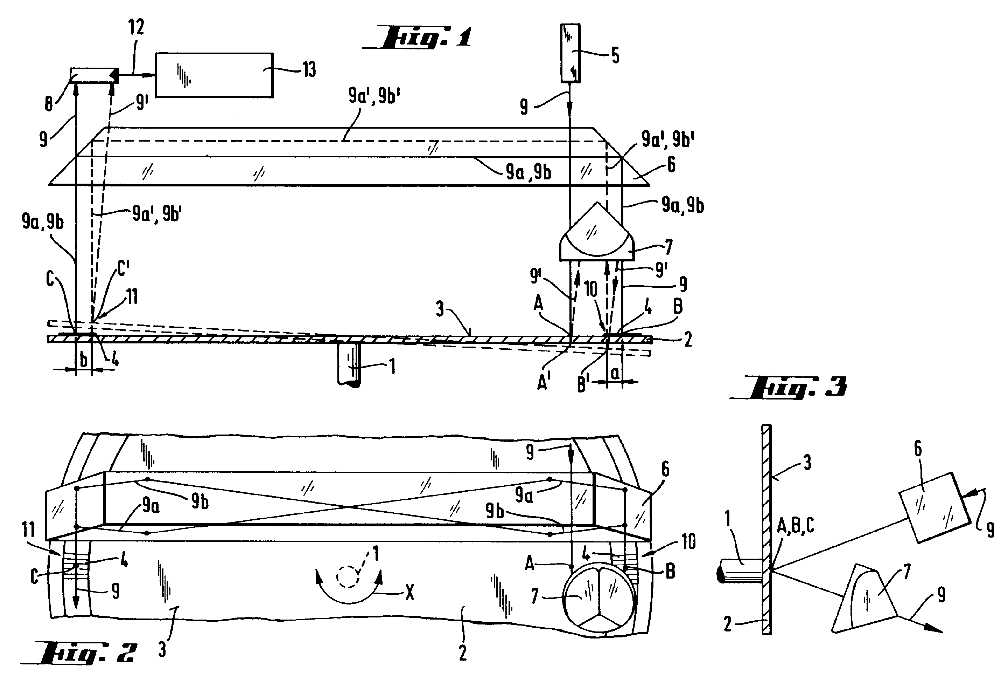

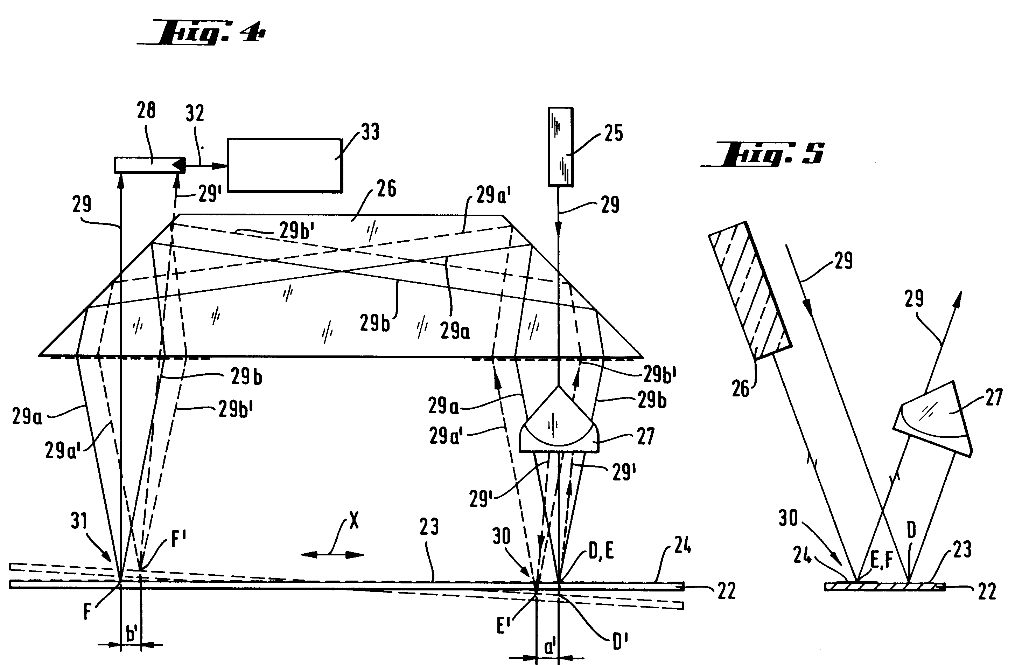

In den Figuren 1 - 3 ist schematisch in zwei Seitenansichten und in einer Draufsicht eine lichtelektrische Winkelmeßeinrichtung zur Messung der Relativlage zweier nicht dargestellter Objekte, beispielsweise zweier Maschinenteile einer Bearbeitungsmaschine, gezeigt. Ein um eine Drehachse 1 in Meßrichtung X drehbar gelagerter Teilungsträger 2 in Form einer kreisförmigen ebenen Teilscheibe ist mit dem einen drehbaren Objekt verbunden und besitzt auf seiner reflektierenden Oberfläche 3 an der Peripherie eine inkrementale Winkelteilung 4 in Form eines Phasengitters. Diese Winkelteilung 4 wird von einer mit dem zweiten feststehenden Objekt verbundenen Abtasteinheit im Auflicht abgetastet, die eine Lichtquelle 5 in Form eines Lasers, ein in radialer Richtung bezüglich der Teilscheibe 2 angeordnetes Umlenkprisma 6, ein optisches Umlenkelement 7 in Form eines Tripelprimas sowie ein Photoelement 8 aufweist. Ein vom Laser 5 ausgehender Lichtstrahl 9 fällt im durchgezogenen Strahlengang durch das Umlenkprisma 6 im Punkt A auf die Oberfläche 3 der Teilscheibe 2 außerhalb der Winkelteilung 4 und trifft nach Reflexion an der Oberfläche 3 und zweimaliger Umlenkung durch das Tripelprisma 7 parallel zu sich selbst mit gegenläufigem Richtungssinn im Auftreffpunkt B auf die Winkelteilung 4 in einem ersten Winkelteilungsbereich 10. Der Lichtstrahl 9 wird im Auftreffpunkt B vom Phasengitter der Winkelteilung 4 unter Reflexion und unter zwei gleichen Beugungswinkeln in zwei Beugungsstrahlen 9a, 9b erster Ordnung aufgespalten, deren gemeinsame Ebene parallel zum einfallenden Lichtstrahl 9 verläuft und die das Umlenkprisma 6 jeweils unter zweimaliger Reflexion an seinen Seitenwänden durchlaufen und sich unter den gleichen zugehörigen Beugungswinkeln im Vereinigungspunkt C in einem zweiten Winkelteilungsbereich 11 der Winkelteilung 4 wiedervereinigen, der dem ersten Winkelteilungsbereich 10 diametral gegenüberliegt. Die beiden im ersten Winkelteilungsbereich 10 erzeugten Beugungsstrahlen 9a, 9b treffen jeweils unter dem Beugungswinkel mit entgegengesetztem Vorzeichen im zweiten Winkelteilungsbereich 11 auf. Nach erneuter Beugung und Reflexion durch das Phasengitter der Winkelteilung 4 geht vom zweiten Winkelteilungsbereich 11 ein Lichtstrahl 9 aus, der parallel mit gegenläufigem Richtungssinn zum auf den ersten Winkelteilungsbereich 10 im Auftreffpunkt B auftreffenden Lichtstrahl 9 ist und durch Interferenz der beiden Beugungsstrahlen 9a, 9b entsteht. Der vom zweiten Winkelteilungsbereich 11 reflektierte Lichtstrahl 9 fällt auf das Photoelement 8, das bei Drehung der Teilscheibe 2 ein periodisches Abtastsignal 12 liefert, aus dem in einer nachgeschalteten Auswerteeinrichtung 13 in bekannter Weise die Winkelmeßwerte für die Winkellage der beiden relativ zueinander drehbaren Objekte gewonnen werden.

Dieser oben geschilderte ideale Strahlengang ergibt sich bei einer exakt senkrechten Montage der Teilscheibe 2 auf der Drehachse 1, die jedoch fertigungsbedingt im allgemeinen nicht vorliegt, so daß durch das Taumeln der sich drehenden Teilscheibe 2 Taumelfehler auftreten, die zu Meßungenauigkeiten führen. Wie eingangs bereits erwähnt, wandert durch dieses Taumeln der Teilscheibe 2 der Vereinigungspunkt C der beiden Beugungsstrahlen 9a, 9b im zweiten Winkelteilungsbereich 11 in tangentialer und radialer Richtung, so daß ohne das Umlenkelement 7 der Auftreffpunkt B des von der Lichtquelle 5 ausgehenden Lichtstrahls 9 im ersten Winkelteilungsbereich 10 und der Vereinigungspunkt C der beiden Beugungsstrahlen 9a, 9b im zweiten Winkelteilungsbereich 11 nicht mehr auf demselben Radius liegen; da die Gitterkonstante der inkrementalen Winkelteilung 4 vom Radius abhängt, werden somit in den beiden Winkelteilungsbereichen 10, 11 unterschiedliche Gitterkonstanten abgetastet; dies führt zu einer Beugungswinkeldispersion der beiden Beugungsstrahlen und damit zu einer Verschlechterung des Kontrastes der Interferenz der beiden Beugungsstrahlen.

Diese nicht exakt senkrechte Montage der Teilscheibe 2 auf der Drehachse 1 ist in Figur 1 gestrichelt dargestellt. Da der vom Laser 5 ausgehende Lichtstrahl 9 nun nicht mehr im Punkt A auf die Oberfläche 3 der horizontal verlaufenden Teilscheibe 2 außerhalb der Winkelteilung 4, sondern im Punkt A' außerhalb der Winkelteilung 4 auf die schräg verlaufende Teilscheibe 2 auftrifft, ergibt sich nachfolgend der gestrichelt gezeichnete Strahlenverlauf. Der im Punkt A' von der Oberfläche 3 der Teilscheibe 2 reflektierte Lichtstrahl 9' fällt nach zweimaliger Umlenkung durch das Tripelprisma 7 parallel zu sich selbst mit gegenläufigem Richtungssinn im Auftreffpunkt B' auf die Winkelteilung 4 der schräg verlaufenden Teilscheibe 2 im ersten Winkelteilungsbereich 10. Der Lichtstrahl 9' wird sodann im Auftreffpunkt B' vom Phasengitter der Winkelteilung 4 unter Reflexion und unter zwei gleichen Beugungswinkeln in zwei Beugungsstrahlen 9a', 9b' erster Ordnung aufgespalten, deren gemeinsame Ebene nun parallel zum einfallenden Lichtstrahl 9 verläuft und die das Umlenkprisma 6 nach Figur 1 parallel zu den Beugungsstrahlen 9a, 9b unter zweimaliger Reflexion an seinen Seitenwänden durchlaufen und sich in einem Vereinigungspunkt C' unter den gleichen zugehörigen Beugungswinkeln im zweiten Winkelteilungsbereich 11 der schräg verlaufenden Teilscheibe 2 wiedervereinigen; ohne die erfindungsgemäßen Merkmale würden beim vorgenannten Stand der Technik die Beugungsstrahlen 9a', 9b' nicht parallel zu den Beugungsstrahlen 9a, 9b verlaufen, so daß die besagten Taumelfehler auftreten. Die beiden im ersten Winkelteilungsbereich 10 erzeugten Beugungsstrahlen 9a' , 9b' treffen jeweils unter dem Beugungswinkel mit entgegengesetztem Vorzeichen im zweiten Winkelteilungsbereich 11 auf die Winkelteilung 4 der schräg verlaufenden Teilscheibe 2 auf. Nach erneuter Beugung und Reflexion geht vom zweiten Winkelteilungsbereich 11 ein Lichtstrahl 9' aus, der parallel mit gegenläufigem Richtungssinn zum im Auftreffpunkt B' des ersten Winkelteilungsbereiches 10 auftreffenden Lichtstrahl 9' ist und durch Interferenz der beiden Beugungsstrahlen 9a', 9b' entsteht. Der vom zweiten Winkelteilungsbereich 11 reflektierte Lichtstrahl 9' fällt auf das Photoelement 8, das bei Drehung der Teilscheibe 2 das periodische Abtastsignal 12 zur Gewinnung der Winkelmeßwerte für die Winkellage der relativ zueinander drehbaren Objekte liefert.

Bei der Umlenkung der beiden Beugungsstrahlen 9a', 9b' vom ersten Winkelteilungsbereich 10 zum zweiten Winkelteilungsbereich 11 der taumelbehafteten Teilscheibe 2 verschiebt sich ihr Vereinigungspunkt C' gegenüber dem Vereinigungspunkt C der beiden Beugungsstrahlen 9a, 9b bei taumelfreier Teilscheibe 2 zu beiden Seiten radial und tangential; in der momentanen Lage der schräg verlaufenden Teilscheibe 2 nach Figur 1 besteht zwischen den beiden Vereinigungspunkten C, C' der Abstand b. Der vom Tripelprisma 7 im ersten Winkelteilungsbereich 10 erzeugte Abstand a zwischen dem Auftreffpunkt B bei taumelfreier Teilscheibe 2 und dem Auftreffpunkt B' bei taumelbehafteter Teilscheibe 2 ist gleich dem Abstand b im zweiten Winkelteilungsbereich 11 im gegenläufigen Richtungssinn, so daß der Auftreffpunkt B und der Vereinigungspunkt C des Strahlenganges bei taumelfreier Teilscheibe 2 und der Auftreffpunkt B' und der Vereinigungspunkt C' des Strahlengangs bei taumelbehafteter Teilscheibe 2 jeweils immer auf dem gleichen Radius liegen, so daß auftretende Taumelfehler sich nicht nachteilig auf das Meßergebnis auswirken können.

In den Figuren 4 und 5 ist schematisch in einer Seitenansicht und in einem Querschnitt eine lichtelektrische Längenmeßeinrichtung zur Messung der Relativlage zweier nicht dargestellter Objekte, beispielsweise zweier Maschinenteile einer Bearbeitungsmaschine, gezeigt. Ein mit dem einen verschiebbaren Objekt verbundener und in Meßrichtung X längsverschieblicher linearer Teilungsträger 22 besitzt auf seiner reflektierenden Oberfläche 23 eine inkrementale Linearteilung 24 in Form eines Phasengitters. Diese Linearteilung 24 wird von einer mit dem zweiten feststehenden Objekt verbundenen Abtasteinheit im Auflicht abgetastet, die eine Lichtquelle 25 in Form eines Lasers, ein in Meßrichtung X verlaufendes Umlenkprisma 26, ein optisches Umlenkelement 27 in Form eines Tripelprismas sowie ein Photoelement 28 aufweist.

Ein vom Laser 25 ausgehender Lichtstrahl 29 fällt im durchgezogenen Strahlengang im Punkt D auf die Oberfläche 23 des Teilungsträgers 22 außerhalb der Linearteilung 24 und trifft nach Reflexion an der Oberfläche 23 und zweimaliger Umlenkung durch das Tripelprisma 27 parallel zu sich selbst mit gegenläufigem Richtungssinn im Auftreffpunkt E auf die Linearteilung 24 in einem ersten Linearteilungsbereich 30. Der Lichtstrahl 29 wird im Auftreffpunkt E vom Phasengitter der Linearteilung 24 unter Reflexion und unter zwei gleichen Beugungswinkeln in zwei Beugungsstrahlen 29a, 29b erster Ordnung aufgespalten, deren gemeinsame Ebene parallel zum einfallenden Lichtstrahl 29 verläuft und die das Umlenkprisma 26 jeweils unter zweimaliger Reflexion an den Stirnseiten durchlaufen und sich unter den gleichen zugehörigen Beugungswinkeln im Vereinigungspunkt F in einem zweiten Linearteilungsbereich 31 der Linearteilung 24 wiedervereinigen, der vom ersten Linearteilungsbereich 30 in Meßrichtung X beabstandet ist. Die beiden im ersten Linearteilungsbereich 30 erzeugten Beugungsstrahlen 29a, 29b treffen jeweils unter dem Beugungswinkel mit entgegengesetztem Vorzeichen im zweiten Linearteilungsbereich 31 auf. Nach erneuter Beugung und Reflexion durch das Phasengitter der Linearteilung 24 geht vom zweiten Linearteilungsbereich 31 ein Lichtstrahl 29 aus, der parallel mit gegenläufigem Richtungssinn zum auf den ersten Linearteilungsbereich 30 im Auftreffpunkt E auftreffenden Lichtstrahl 29 ist und durch Interferenz der beiden Beugungsstrahlen 29a, 29b entsteht. Der vom zweiten Linearteilungsbereich 31 reflektierte Lichtstrahl 29 fällt auf das Photoelement 28, das bei der Bewegung des linearen Teilungsträgers 22 ein periodisches Abtastsignal 32 liefert, aus dem in einer nachgeschalteten Auswerteeinrichtung 33 in bekannter Weise die Meßwerte für die Relativlage der beiden zueinander verschiebbaren Objekte gewonnen werden.

Dieser oben geschilderte ideale Strahlengang ergibt sich bei einer exakten Montage des linearen Teilungsträgers 22 parallel zur Meßrichtung X, die jedoch bei einer unebenen Montagefläche am Objekt nicht immer vorliegt, so daß der lineare Teilungsträger 22 um eine Drehachse senkrecht zur Meßrichtung X gekippt ist (gestrichelte Darstellung). Durch diese Kippung des linearen Teilungsträgers 22 treten bei der Abtastung der Linearteilung 24 Kippfehler auf, die zu Meßungenauigkeiten führen, da sich der Vereinigungspunkt F der beiden Beugungsstrahlen 29a, 29b im zweiten Linearteilungsbereich 31 in Meßrichtung X verschiebt; der Betrag dieser Verschiebung wirkt sich dabei direkt als Meßfehler aus.

Der vom Laser 25 ausgehende Lichtstrahl 29 fällt nunmehr im Punkt D' auf die Oberfläche 23 des gekippten Teilungsträgers 22 außerhalb der Linearteilung 24, so daß sich nachfolgend der gestrichelt gezeichnete Strahlenverlauf ergibt. Der im Punkt D' von der Oberfläche 23 des gekippten Teilungsträgers 22 reflektierte Lichtstrahl 29' trifft nach zweimaliger Umlenkung durch das Tripelprisma 27 parallel zu sich selbst mit gegenläufigem Richtungssinn im Auftreffpunkt E' auf die Linearteilung 24 im ersten Linearteilungsbereich 30. Der Lichtstrahl 29' wird sodann im Auftreffpunkt E' vom Phasengitter der Linearteilung 24 unter Reflexion und unter zwei gleichen Beugungswinkeln in zwei Beugungsstrahlen 29a', 29b' erster Ordnung aufgespalten, deren Ebene parallel zum einfallenden Lichtstrahl 29 verläuft und die das Umlenkprisma 26 nach Figur 4 unter zweimaliger Reflexion an seinen Stirnseiten durchlaufen und sich in einem Vereinigungspunkt F' unter den gleichen zugehörigen Beugungswinkeln im zweiten Linearteilungsbereich 31 des gekippten Teilungsträgers 22 wiedervereinigen. Die beiden im ersten Linearteilungsbereich 30 erzeugten Beugungsstrahlen 29a', 29b' treffen jeweils unter dem Beugungswinkel mit entgegengesetztem Vorzeichen im zweiten Linearteilungsbereich 31 auf die Linearteilung 24 des gekippten Teilungsträgers 22 auf. Nach erneuter Beugung und Reflexion geht vom zweiten Linearteilungsbereich 31 ein Lichtstrahl 29' aus, der parallel mit gegenläufigem Richtungssinn zum im Auftreffpunkt E' des ersten Linearteilungsbereiches 30 auftreffenden Lichtstrahl 29' ist und durch Interferenz der beiden Beugungsstrahlen 29a', 29b' entsteht. Der vom zweiten Linearteilungsbereich reflektierte Lichtstrahl 29' fällt auf das Photoelement 28, das bei einer Verschiebung des Teilungsträgers 22 in Meßrichtung X das periodische Abtastsignal 32 zur Gewinnung der Meßwerte für die Relativlage der zueinander verschiebbaren Objekte liefert.

Bei der Umlenkung der beiden Beugungsstrahlen 29a', 29b' vom ersten Linearteilungsbereich 30 zum zweiten Linearteilungsbereich 31 des gekippten Teilungsträgers 22 verschiebt sich ihr Vereinigungspunkt F' gegenüber dem Vereinigungspunkt F der beiden Beugungsstrahlen 29a, 29b bei ungekipptem Teilungsträger 22 um den Abstand b'. Der vom Tripelprisma 27 im ersten Linearteilungsbereich 30 erzeugte Abstand a' zwischen dem Auftreffpunkt E bei ungekipptem Teilungsträger 22 und dem Auftreffpunkt E' bei gekipptem Teilungsträger 22 ist gleich dem Abstand b' im zweiten Linearteilungsbereich 31 im gleichläufigen Richtungssinn, so daß auftretende Kippfehler sich nicht nachteilig auf das Meßergebnis auswirken können.

Die Erfindung ist sinngemäß auch bei lichtelektrischen Positionsmeßeinrichtungen im Durchlichtverfahren einsetzbar.

## Patentansprüche

1. Lichtelektrische Positionsmeßeinrichtung zur Messung der Relativlage zweier zueinander beweglicher Objekte, bei der die Teilung (4, 24) eines mit dem einen Objekt verbundenen Teilungsträgers (2, 22) von einer mit dem anderen Objekt verbundenen Abtasteinheit abtastbar ist, die eine Lichtquelle (5, 25) sowie ein Photoelement (8, 28) aufweist, wobei ferner die Teilung (4, 24) mittels Lichtstrahlenbeugung in zwei Teilungsbereichen (10 , 11; 30, 31) abtastbar ist und bei der im Verwendungsfall die vom ersten Teilungsbereich (10, 30) unter gleichen Beugungswinkeln ausgehenden beiden Beugungsstrahlen (9a', 9b'; 29a', 29b') einer Ordnung sich nach mehrmaliger Umlenkung mittels eines Umlenkprismas (6, 26) unter den gleichen zugehörigen Beugungswinkeln im zweiten Teilungsbereich (11, 31) vereinigen, dadurch gekennzeichnet, daß die Positionsmeßeinrichtung so ausgelegt ist, daß beim Meßvorgang der von der Lichtquelle (5, 25) der Abtasteinheit ausgehende Lichtstrahl (9, 29) in einem Auftreffpunkt (A, D) außerhalb der Teilung (4, 24) auf den Teilungsträger (2, 22) gelenkt ist, und ferner der von diesem Auftreffpunkt (A, D) des Teilungsträgers (2, 22) ausgehende Lichtstrahl (9', 29') mittels eines optischen Umlenkelements (7,27) umgelenkt wird und nach Richtungsumkehr parallel zu sich selbst auf die Teilung (4, 24) im ersten Teilungsbereich (10, 30) auftrifft, so daß die von der Teilung (4, 24) ausgehenden beiden Beugungsstrahlen (9a', 9b'; 29a', 29b') unabhängig vom Taumeln oder Kippen des Teilungsträgers (2, 22) immer in die Richtung weisen, die sich bei exakter Lage der Teilung (4, 24) ergibt, und daß der dabei sich ergebende Versatz (a, a') im ersten Teilungsbereich (10, 30) durch das Umlenkprisma (6, 26) einen gleich großen, gegenläufigen Versatz (b, b') im zweiten Teilungsbereich (11, 31) bewirkt.

2. Meßeinrichtung nach Anspruch 1, dadurch gekennzeichnet, daß das optische Umlenkelement (7, 27) durch ein Tripelprisma gebildet ist.

3. Meßeinrichtung nach Anspruch 1, dadurch gekennzeichnet, daß der Teilungsträger (2) aus einer kreisförmigen Teilscheibe mit einer Winkelteilung (4) besteht und daß der erste Winkelteilungsbereich (10) dem zweiten Winkelteilungsbereich (11) diametral gegenüberliegt.

4. Meßeinrichtung nach Anspruch 1, dadurch gekennzeichnet, daß die Teilung (4, 24) aus einem Phasengitter besteht.

## Claims

1. Photoelectric position measuring device for measuring the relative position of two objects movable with respect to one another, wherein the scale (4, 24) of a scale carrier (2, 22) connected to one object is scannable by a scanning unit connected to the other object and having a light source (5, 25) and a photocell (8, 28), the scale (4, 24) being moreover scannable in two zones (10, 11; 30, 31) by means of light beam diffraction, and wherein in the case of use the two diffraction beams (9a', 9b'; 29a', 29b') of one order emanating from the first scale zone (10, 30) at the same angles of diffraction combine in the second scale zone (11, 31) at the same associated angles of diffraction after repeated deviation by means of a deviating prism (6, 26), characterised in that the position measuring device is so designed that in the measuring operation the light beam (9, 29) emanating from the light source (5, 25) of the scanning unit is directed on to the scale carrier (2, 22) at a point of incidence (A, D) outside the scale (4, 24), and moreover the light beam (9', 29') emanating from this point of incidence (A, D) of the scale carrier (2, 22) is deviated by means of an optical deviating element (7, 27) and, after reversal of direction parallel to itself, strikes the scale (4, 24) in the first scale zone (10, 30), so that irrespective of wobbling or tilting of the scale carrier (2, 22), the two diffraction beams (9a', 9b', 29a', 29b') emanating from the scale (4, 24) always point in the direction which results with an exact position of the scale (4, 24), and the shift (a, a') arising in the process in the first scale zone (10, 30) produces through the deviating prism (6, 26) a shift (b, b') of equal size and opposite direction in the second scale zone (11, 31).

2. Measuring device according to claim 1, characterised in that the optical deviating element (7, 27) is formed by a triple prism.

3. Measuring device according to claim 1, characterised in that the scale carrier (2) consists of a circular graduated plate with an angle scale (4) and the first angle scale zone (10) is located diametrically opposite the second angle scale zone (11).

4. Measuring device according to claim 1, characterised in that the scale (4, 24) consists of a phase grating.

## Revendications

1. Dispositif photo-électrique de mesure de position pour la mesure de la position relative de deux objets mobiles l'un par rapport à l'autre, dans lequel la graduation (4, 24) d'un support de graduation (2, 22) lié à l'un des objets peut être lue par une unité de lecture liée à l'autre objet et comportant une source lumineuse (5, 25) et une cellule photo-électrique, la graduation (4, 24) étant lue par diffraction de rayons lumineux dans deux zones de graduation (10, 11; 30 ,31), et dans lequel lors de l'utilisation, les deux rayons diffractés (9a', 9b'; 29a', 29b') d'ordre donné qui sortent de la première zone de graduation (10, 30) avec le même angle de diffraction, après plusieurs déviations subies dans un prisme déviateur (6, 26), se réunissent avec les mêmes angles de diffraction respectifs dans la deuxième zone de graduation (11, 31), caractérisé par le fait que le dispositif de mesure de position est agencé de manière telle que, lors de la mesure, le rayon lumineux (9, 29) provenant de la source lumineuse (5, 25) de l'unité de lecture est dévié vers un point (A, D) du support de graduation (2, 22) situé en dehors de la graduation (4, 24) et le rayon lumineux (9', 29') sortant du point d'impact (A, D) sur le support de graduation (2, 22) est dévié à l'aide d'un élément de déviation (7, 27) optique et après inversion de la direction parallèlement à lui-même frappe la garduation (4, 24) dans la première zone de graduation (10, 30) de telle sorte que les deux rayons diffractés (9a', 9b'; 29a', 29b') qui sortent de la graduation (4, 24), indépendamment de l'oscillation ou du pivotement du support de graduation (2, 22), sont toujours orientés dans la direction correspondant à la position exacte de la graduation (4, 24), et par le fait que le décalage (a, a') obtenu dans la première zone de graduation (10, 30) engendre par l'intermédiaire du prisme déviateur (6, 26) un décalage (b, b') opposé de même valeur dans la deuxième zone de graduation (11, 31).

2. Dispositif de mesure selon la revendication 1, caractérisé par le fait que l'élément de déviation (7, 27) est un prisme triple.

3. Dispositif de mesure selon la revendication 1, caractérisé par le fait que le support de graduation (2) est constitué par un disque gradué circulaire qui porte une graduation angulaire (4) et par le fait que la première zone de graduation (10) est diamétralement opposée à la deuxième zone de graduation (11).

4. Dispositif de mesure selon la revendication 1, caractérisé par le fait que la graduation (4, 24) est constituée par un réseau de phase.
